# EUROPEAN PATENT SPECIFICATION

(11) **EP 1 395 390 B1**
(45) Date of publication and mention of the grant of the patent: **08.11.2006**
(21) Application number: 02741569.4
(22) Date of filing: 10.06.2002
(51) Int. Cl.: B23Q 3/08

(54) **WORKING JIG**
ARBEITS-SPANNVORRICHTUNG
GABARIT DE TRAVAIL

(30) Priority: 12.06.2001 SE 0102063
(43) Date of publication of application: 10.03.2004
(73) Proprietor: Gunnarsson, Tomas, 560 27 Tenhult (SE)
(72) Inventor: Gunnarsson, Tomas, 560 27 Tenhult (SE)
(74) Representative: Lundquist, Arne
(86) International application number: PCT/SE2002/001123
(87) International publication number: WO 2002/100590

(56) References cited:
- US-A- 4 679 470
- US-A- 5 836 573

## Description

The present invention relates to a working jig, comprising a number of hydraulically controlled set elements with inlets for hydraulic fluid under pressure.

Such working jigs are common in the manufacturing industry. Hereby the hydraulic systems have been formed as separate pipes leading to every set element, which means, that the machine gets a large and cumbersome size, or in the form of drilled channels, which are difficult and time- consuming to make. Thus there is a demand for a hydraulic system of the art mentioned introductorily, which gives a working jig, easy to handle and easy to manufacture. According to the invention such a working jig is characterised in that it comprises a plane side, which is provided with a number of elongated first cavities, whereas a cover is provided to form, tightening, the upper side of said cavities, such that channels are formed leading to said inlets for hydraulic fluid, fed by a connection between a pressure source and said channels. In order to enable said channels to contain the relatively high pressure, that is needed for hydraulic control of the set elements, normally there are provided sealing elements between the cover and the plane side, in which the elongated cavities are provided. In one advantageous embodiment of the hydraulic system according to the invention the elongated first cavities at each side are surrounded by adjacently running second and third cavities intended to hold elastic first and second sealing elements, tightening pressing against the cover. Said cavities may easily be milled in a N C milling apparatus. The sealing elements may have different forms, but the second and third cavities suitably have rectangular cross sections, whilst the sealing elements have O- ring form. The sealing elements suitably form one single endless band. In practice this means, that the sealing elements are manufactured in the pattern, fitting directly in the second respectively third cavities.

The invention is described more in detail in the following, reference being made to the enclosed figures, of which:
figure 1 shows, schematically in perspective a working jig, as an example of the invention, whilst

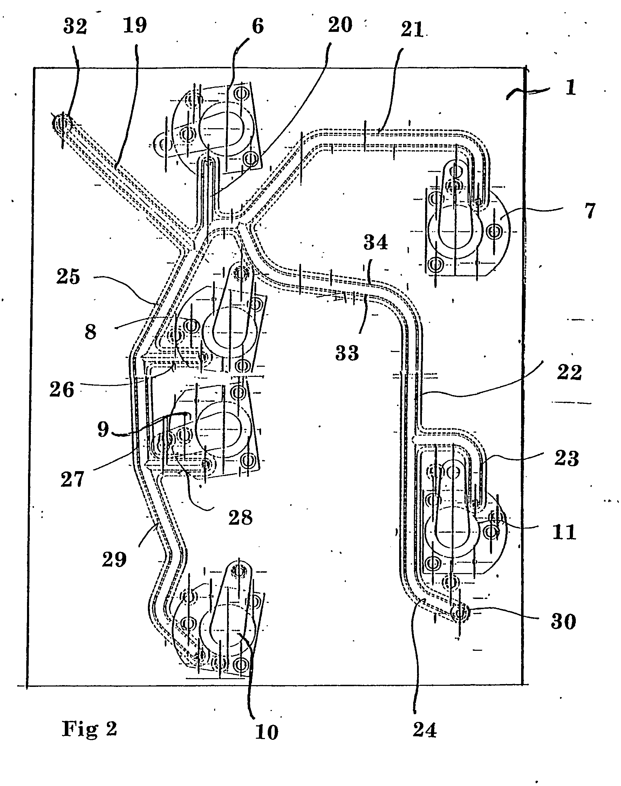

figure 2 shows, schematically, omitting details, the front side of the working jig in figure 1, with first, second and third cavities indicated with lines.

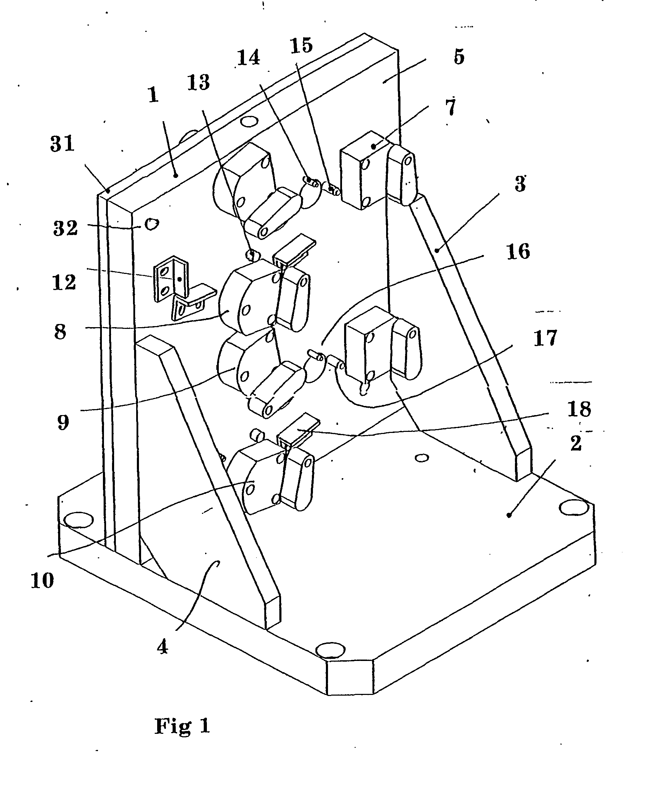

In figure 1 a vertical plane support plate is denoted by 1. It is fastened to a foundation 2 with two side supports 3 and 4. At the front 5 of the support plate 1 there are mounted six hydraulically controlled set elements in the form of so called swing cylinders 6- 11. In addition thereto there is a number of guide elements 12 - 18, intended to guide the worked piece to a correct position in the working jig.

At the back side of the support plate a number of continuous elongated first cavities are milled, forming continuous channels 19- 29 leading to the inlets of the set elements 6 -11 from an inlet 30, connected to an outer, not shown pressure source. As is obvious from figure 1, a plane cover 31 is applied to the back side of the support plate, whereby the channels 19- 29 are closed at the upper side, such that they form lines for hydraulic fluid to the inlets of the set elements. The channel 19 also has a recess 32 for a manometer. At each side of the elongated first cavities there are provided running second and third cavities, here only indicated by 33 and 34, intended to hold elastic first and second sealing elements. Suitably the second and third cavities show rectangular cross sections, such that they partly may hold sealing elements. In the embodiment shown the sealing elements form one single endless band. It is suitable to manufacture it directly with the desired form, such that the sealing element can be placed directly into the second and third cavities.

## Claims

1. A working jig, comprising a number of hydraulically controlled set elements (6-11) with inlets for hydraulic fluid under pressure,
**characterised in**
**that** it comprises a plane side, which is provided with a number of elongated first cavities (19- 29), whereas a cover (31) is provided to form, tightening, the upper side of said cavities, such that channels are formed leading to said inlets for hydraulic fluid, fed by a connection (30) between a pressure source and said channels.

2. A working jig according to claim 1,
**characterised in**
**that** the elongated first cavities (19- 29) at each side are surrounded by adjacently running second and third cavities (33-34) intended to hold elastic first and second sealing elements, tightening pressing against the cover.

3. A working jig according to claim 2,
**characterised in**
**that** the second an third cavities show rectangular cross sections whilst the sealing elements show O- ring form.

4. A working jig according to claim 2 or 3.
**characterised in**
**that** the sealing elements form one single endless band (33,34).

## Patentansprüche

1. Arbeits-Spannvorrichtung mit einer Anzahl von hydraulisch gesteuerten Einstellelemanten (6 - 11) mit Einlässen für eine unter Druck stehende Hydraulikflüssigkeit, **gekennzeichnet durch**
eine ebene Seite, die mit einer Anzahl von länglichen ersten Vertiefungen (19 - 29) versehen ist, wobei eine Abdeckung (31) zur Bildung einer abdichtenden oberen Seite der Vertiefungen vorgesehen ist, so dass Kanäle gebildet werden, die zu den Einlässen für die Hydraulikflüssigkeit führen, die **durch** eine Verbindung (30) zwischen einer Druckquelle und den Kanälen zugeführt wird.

2. Arbeits-Spannvorrichtung nach Anspruch 1,
**dadurch gekennzeichnet, dass** die länglichen ersten Vertiefungen (19 - 29) an jeder Seite von benachbart verlaufenden zweiten und dritten Vertiefungen (33 - 34) umgeben sind, die dazu vorgesehen sind, elastische erste und zweite Abdichtelemente zu halten, die abdichtend gegen die Abdeckung drücken.

3. Arbeits-Spannvorrichtung nach Anspruch 2,
**dadurch gekennzeichnet, dass** die zweiten und dritten Vertiefungen einen rechteckigen Querschnitt aufweisen, während die Abdichtelemente eine O-Ringform haben.

4. Arbeits-Spannvorrichtung nach Anspruch 2 oder 3,
**dadurch gekennzeichnet, dass** die Abdichtelemente ein einziges Endlosband (33,34) bilden.

## Revendications

1. Gabarit de travail, comprenant un certain nombre d'éléments d'ajustement commandés hydrauliquement (6 - 11) avec des entrées pour fluide hydraulique sous pression,
**caractérisé en ce qu'**il comprend un côté plan, qui est formé avec un certain nombre de premières cavités allongées (19 - 29), tandis qu'un couvercle (31) est constitué afin de former, par serrage, les côtés supérieurs desdites cavités, de sorte que des canaux sont formés conduisant auxdites entrées pour fluide hydraulique, alimentés par une connexion (30) entre une source de pression et lesdits canaux.

2. Gabarit de travail selon la revendication 1, **caractérisé en ce que** les premières cavités allongées (19 - 29) au niveau de chaque côté sont entourées par les deuxième et troisième cavités passant de manière adjacente (33 - 34) destinées à maintenir des premier et deuxième éléments d'étanchéité élastiques, pressés par serrage contre le couvercle.

3. Gabarit de travail selon la revendication 2, **caractérisé en ce que** les deuxième et troisième cavités présentent des sections transversales rectangulaires alors que les éléments d'étanchéité présentent une forme torique.

4. Gabarit de travail selon la revendication 2 ou 3, **caractérisé en ce que** les éléments d'étanchéité forment une seule et unique bande sans fin (33, 34).
